# EUROPEAN PATENT SPECIFICATION

(11) **EP 4 253 886 B1**
(45) Date of publication and mention of the grant of the patent: **04.03.2026**
(21) Application number: 21913521.7
(22) Date of filing: 15.11.2021
(51) Int. Cl.: F25D 25/02, F25D 17/04, F25D 23/12, F25D 29/00, A23B 2/80

(54) **REFRIGERATOR HAVING REFRIGERATED STORAGE DEVICE**
KÜHLSCHRANK MIT KÜHLLAGERUNGSVORRICHTUNG
RÉFRIGÉRATEUR DOTÉ D'UN DISPOSITIF DE STOCKAGE DE PRODUITS RÉFRIGÉRÉS

(30) Priority: 31.12.2020 CN 202011640498
(43) Date of publication of application: 04.10.2023
(73) Proprietor: Qingdao Haier Refrigerator Co., Ltd., Laoshan District Qingdao Shandong 266101 (CN); Haier Smart Home Co., Ltd., Qingdao, Shandong 266101 (CN)
(72) Inventor: LI, Mengcheng, Qingdao, Shandong 266101 (CN); ZHU, Xiaobing, Qingdao, Shandong 266101 (CN); FEI, Bin, Qingdao, Shandong 266101 (CN); LIU, Haoquan, Qingdao, Shandong 266101 (CN); ZHAO, Bintang, Qingdao, Shandong 266101 (CN); WANG, Jiyun, Qingdao, Shandong 266101 (CN)
(74) Representative: Gille Hrabal Partnerschaftsgesellschaft mbB Patentanwälte
(86) International application number: PCT/CN2021/130608
(87) International publication number: WO 2022/142778

(56) References cited:
- WO-A1-03/038355
- CN-A- 106 839 581
- CN-A- 107 965 960
- CN-A- 110 074 310
- CN-A- 110 108 076
- CN-A- 111 043 826
- CN-A- 111 043 826
- CN-U- 207 422 749
- CN-U- 208 332 808
- CN-U- 214 536 999
- JP-A- 2002 333 250

## Description

### TECHNICAL FIELD

The present invention relates to a refrigerator with a freezing storage device.

### BACKGROUND

Users pay more and more attention to a freshness retaining effect of stored food, and most freshness retaining storage in a prior art focuses on refrigerating freshness retaining and neglects freezing freshness retaining. However, food materials required to be frozen, such as meat, fish and shrimp, often have problems of a poor taste and a dark color caused by water loss after frozen, and particularly, some high-grade food materials required to be frozen have greatly reduced quality after frozen, which also influences use experience of the users.

In order to improve freezing storage quality, many improvement solutions emerge in the prior art; for example, a freezing speed of food is increased by quick freezing or the food gets into a supercooled state, which requires an increase of a refrigerating capacity of a refrigerator and also results in increased energy consumption of the refrigerator. Therefore, realization of a more efficient improvement of the freezing storage quality becomes a technical problem to be solved urgently by refrigerator researchers.

After theoretical studies, magnetic fields are found to have a greater influence on formation of ice crystals in the freezing process. Introduction of the magnetic field into freezing freshness retaining is also actively searched in the field of refrigerators; however, a freezing assisting effect of the magnetic field is not satisfactory in practical use in the refrigerator. CN111043826A discloses a refrigerating and freezing device and a control method thereof, wherein by capturing images of the storage room chamber, it is possible to determine whether and where new ingredients are placed in the storage room chamber when the door is opened, so that a magnetic field can be applied to the area where new ingredients are placed. CN208332808U discloses a refrigerator, wherein by controlling the speed of the inverter fan, the opening and closing of the dampers and the release of magnetic energy from the magnets, the temperature of the variable temperature zone can be accurately monitored and controlled.

### SUMMARY

An object of the present invention is to provide a refrigerator, which effectively improves freezing storage quality.

A further object of the present invention is to fit a magnetic field with requirements of freezing refrigeration freshness retaining.

The problem is solved by the refrigerator of claim 1. Preferred embodiments are described in the dependent claims. The present invention provides a refrigerator with a freezing storage device, comprising: a cabinet provided therein with a storage compartment for achieving a freezing storage function; and the freezing storage device arranged in the storage compartment and comprising: a storage box having a freezing storage space defined therein; a storage detection device provided in the storage box and configured to detect a state of stored food in the freezing storage space; and a plurality of groups of electromagnetic coils transversely arranged outside the storage box in parallel and configured to determine a corresponding magnetic field application mode according to the state of the stored food, the magnetic field application mode comprising: stopping of generation of the magnetic field, starting of part of the plural groups of electromagnetic coils, and complete starting of the plural groups of electromagnetic coils.

Optionally, each group of electromagnetic coils comprises: first coils oppositely arranged at a top of the storage box and second coils oppositely arranged at a bottom of the storage box, the first coil and the second coil being connected in series or in parallel.

Optionally, the freezing storage device further comprises: a magnetic frame made of a magnetic material, fitted over the storage box and configured to allow the magnetic field to pass through the magnetic frame to complete a closed loop of a magnetic line.

Optionally, a plurality of first bosses arranged at intervals in a transverse direction of the storage box are formed on an inner side of a top wall of the magnetic frame, and each first boss is configured to arrange the first coil of one group of electromagnetic coils; second bosses arranged opposite to the first bosses are formed on an inner side of a bottom wall of the magnetic frame, and each second boss is configured to arrange the second coil of one group of electromagnetic coils.

Optionally, the storage box comprises: an outer cylinder provided in the space enclosed by the magnetic frame and provided with a forward opening; and a drawer provided in the outer cylinder in a drawable mode.

Optionally, an air inlet and an air return port are formed in a rear wall of the outer cylinder, and the air inlet is configured to be connected with an air supply duct of the refrigerator or communicated with an evaporator of the refrigerator, so as to introduce refrigerating airflow into the storage box; the air return port is configured to be connected with an air return duct of the refrigerator or communicated with the evaporator of the refrigerator, so as to feed airflow after heat exchange back to the air return duct or the evaporator of the refrigerator.

According to the invention, the refrigerator with a freezing storage device further comprises an opening-closing detector, wherein the opening-closing detector is configured to detect an opening-closing state of the storage box; the storage detection device is further configured to detect a change in an internal temperature of a region in the freezing storage space corresponding to each group of electromagnetic coils before the storage box is opened and after the storage box is closed; a refrigeration controller is configured to start refrigeration of the storage box under a condition that the change in the internal temperature of the region corresponding to any group of electromagnetic coils is greater than a first set threshold; and the electromagnetic coil in the corresponding region with the change in the internal temperature greater than the first set threshold is started to release the magnetic field.

Optionally, two groups of electromagnetic coils are provided, and in a magnetic field mode in which the two groups of coils are started simultaneously, magnetic pole directions of the two groups of electromagnetic coils are set to be opposite.

Optionally, after the electromagnetic coil is started, when the internal temperature of the corresponding region is lowered to a second set threshold, the generation of the magnetic field is stopped.

Optionally, the refrigeration controller is further configured to stop the refrigeration of the storage box after the internal temperatures of the corresponding regions of the two groups of electromagnetic coils are lowered to a third set threshold, and perform conventional freezing control on the storage box according to a refrigeration starting condition and a refrigeration stopping condition preset for the storage box, so as to maintain a freezing storage environment of the storage box; the third set threshold is lower than the second set threshold.

In the refrigerator with a freezing storage device according to the present invention, in the freezing storage device, the plurality of groups of electromagnetic coils are arranged outside the storage box, and the plurality of groups of electromagnetic coils determine the corresponding magnetic field application mode according to the state of the stored food in the freezing storage space detected by the storage detection device, such that the magnetic field in the freezing storage space is suitable for the freezing refrigeration process, and on the one hand, the freezing storage quality is improved, and a requirement of a user for storage quality of a precious food material is met. On the other hand, heating of the electromagnetic coil and a magnetization influence on components outside the freezing storage device are also reduced through targeted adjustment.

Further, in the refrigerator with a freezing storage device according to the present invention, a closed path of the magnetic line is provided through the magnetic frame, an assembly structure is provided for the electromagnetic coil, and a occupied space is reduced, thereby improving practicability.

Still further, in the refrigerator with a freezing storage device according to the present invention, an even number of groups of electromagnetic coils, such as two groups of electromagnetic coils, may be arranged. In a case of the magnetic field mode in which the two groups of coils are simultaneously started, by setting the magnetic pole directions of the magnetic fields to be opposite, the magnetic lines can be more uniform, and a magnetization effect on the outside can be canceled or reduced.

Still further, in the refrigerator with a freezing storage device according to the present invention, after an opening-closing event of the storage box, the change in the internal temperature before each region of the storage box is opened and after the region is closed is acquired, whether a new food material is put in or whether the food material is required to be refrozen is determined according to the change in the internal temperature of each region, and therefore, the corresponding magnetic field application mode is started to form a proper magnetic field, such that the food material is frozen in the magnetic field environment to suppress growth of ice crystal nuclei, and therefore, a growth rate of ice crystals is higher than a migration rate of water molecules, and the generated ice crystals are small, thereby reducing damage to cells, avoiding water loss, guaranteeing a better taste of the food material, improving the freezing storage quality, and satisfying the requirement of the user for the storage quality of the precious food material.

Still further, in the refrigerator with a freezing storage device according to the present invention, the switching condition of the electromagnetic field is improved, the magnetic field is applied during main formation of the ice crystals, a use efficiency of the magnetic field is improved, and on the one hand, influences of the magnetic field on other components outside the storage box are reduced, and on the other hand, an energy efficiency of the refrigerator is improved.

The above and other objects, advantages and features of the present invention will become more apparent to those skilled in the art from the following detailed description of specific embodiments thereof taken in conjunction with the accompanying drawings.

### BRIEF DESCRIPTION OF THE DRAWINGS

Some specific embodiments of the invention will be described in detail hereinafter by way of example and not by way of limitation with reference to the accompanying drawings. The same reference numerals identify the same or similar components or parts in the drawings. Those skilled in the art should appreciate that the drawings are not necessarily drawn to scale. In the drawings:
FIG. 1 is a schematic perspective diagram of a refrigerator with a freezing storage device according to an embodiment of the present invention;
FIG. 2 is a schematic diagram of a freezing storage device of a refrigerator with a freezing storage device according to an embodiment of the present invention;
FIG. 3 is a schematic diagram of fitting of a magnetic frame and a storage box in a refrigerator with a freezing storage device according to an embodiment of the present invention;
FIG. 4 is a schematic diagram of a magnetic frame in a refrigerator with a freezing storage device according to an embodiment of the present invention;
FIG. 5 is a schematic diagram of an outer cylinder of a storage box in a refrigerator with a freezing storage device according to an embodiment of the present invention;
FIG. 6 is a schematic diagram of an electromagnetic coil in a refrigerator with a freezing storage device according to an embodiment of the present invention;
FIG. 7 is a schematic diagram of a magnetic field formed in a freezing storage device of a refrigerator with a freezing storage device according to an embodiment of the present invention;
FIG. 8 is a schematic diagram of another magnetic field formed in a freezing storage device of a refrigerator with a freezing storage device according to an embodiment of the present invention;
FIG. 9 is a block diagram of a control system of a refrigerator with a freezing storage device according to an embodiment of the present invention; and
FIG. 10 is a schematic diagram of a freezing control method of a refrigerator with a freezing storage device not part of the claimed invention.

### DETAILED DESCRIPTION

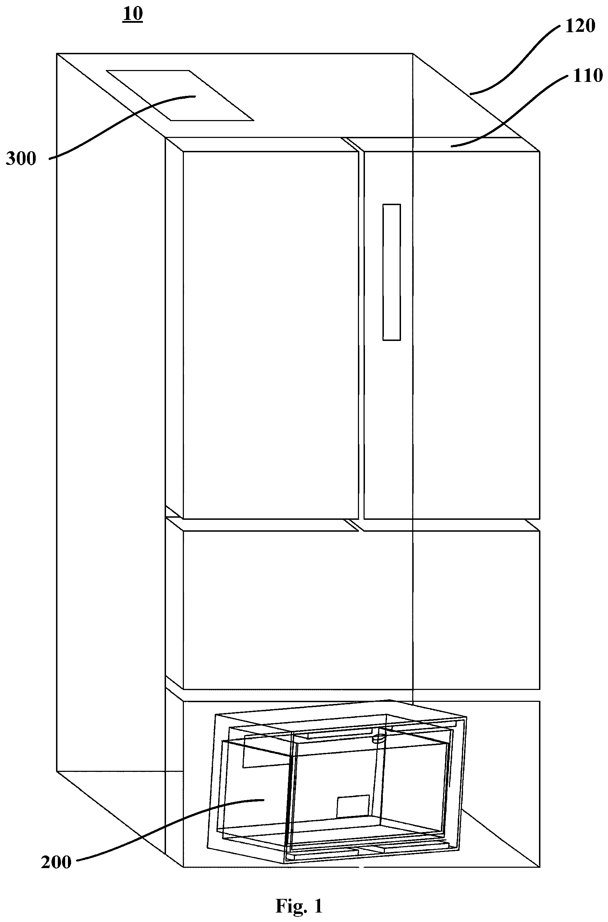

FIG. 1 is a schematic perspective diagram of a refrigerator 10 with a freezing storage device according to an embodiment of the present invention. The refrigerator 10 according to the present embodiment may generally comprise a cabinet 120, a door 110, and a refrigeration system (not shown). The cabinet 120 may define at least one (typically plural) storage compartment with an open front side, such as a refrigerating storage compartment, a freezing storage compartment, a variable temperature storage compartment, or the like. A specific number and specific functions of the storage compartments can be configured according to predetermined requirements. The refrigerator 10 according to the present embodiment at least has a freezing storage compartment or a variable temperature storage compartment with a temperature capable of reaching a freezing range (that is, the variable temperature storage compartment can be used to realize a freezing storage environment); that is, a storage compartment for achieving a freezing storage function is provided in the cabinet 120. A temperature range for freezing storage may generally be set to -14°C to -22°C.

The refrigerator 10 according to the present embodiment may be configured as an air-cooled refrigerator, an air path system is provided in the cabinet 120, and by a fan, refrigerating airflow subjected to heat exchange by an evaporator is fed to the storage compartment through an air supply port, and then returned to an air duct through an air return port. Refrigeration is realized. Since the cabinet 120, the door 110, and the refrigeration system of such a refrigerator are well known and easily implemented by those skilled in the art, in order to avoid covering and obscuring invention points of the present application, the cabinet 120, the door 110, and the refrigeration system are not repeated hereinafter.

A freezing storage device 200 is provided in the freezing storage compartment. The freezing storage device 200 forms an independent closed freezing storage space, and storage quality of the freezing storage space may be improved by means of a magnetic field. Under the action of a magnetic field with certain strength, a free path of water molecules can be limited in a freezing process, which is indicated by breakage of hydrogen bonds in water molecule clusters. Since growth of crystal nuclei is inhibited, a growth rate of ice crystals is higher than a migration rate of the water molecules, and the generated ice crystals are small, such that damage to cells is less, a water loss rate is reduced, and nutrition and a taste of a food material are well preserved. Furthermore, the magnetic field can shorten a freezing time and assist in inhibiting numbers of microorganisms and bacteria. In the refrigerator 10 according to the present embodiment, a targeted improvement is further performed on the magnetic field, and the freezing storage quality is further improved by optimizing a direction and start-stop times of the magnetic field.

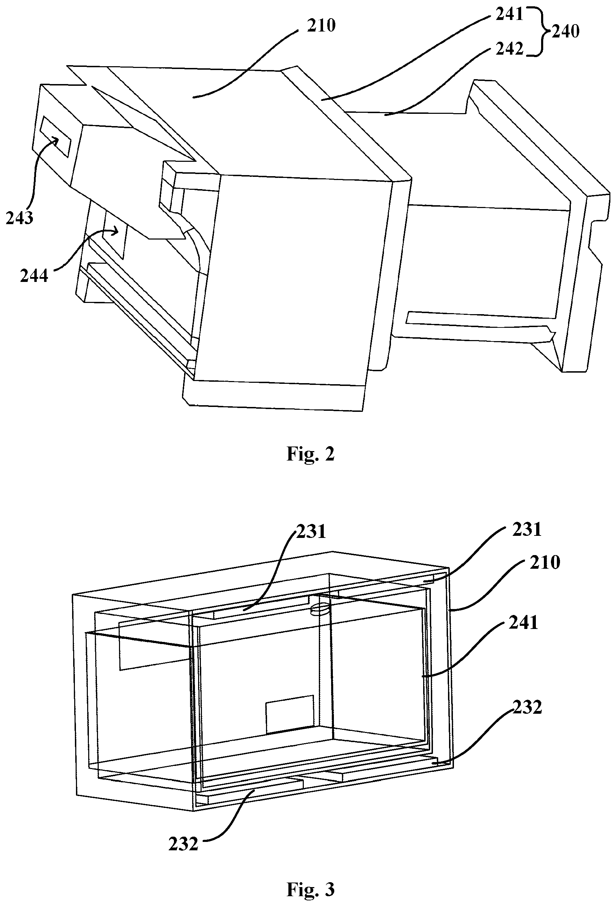

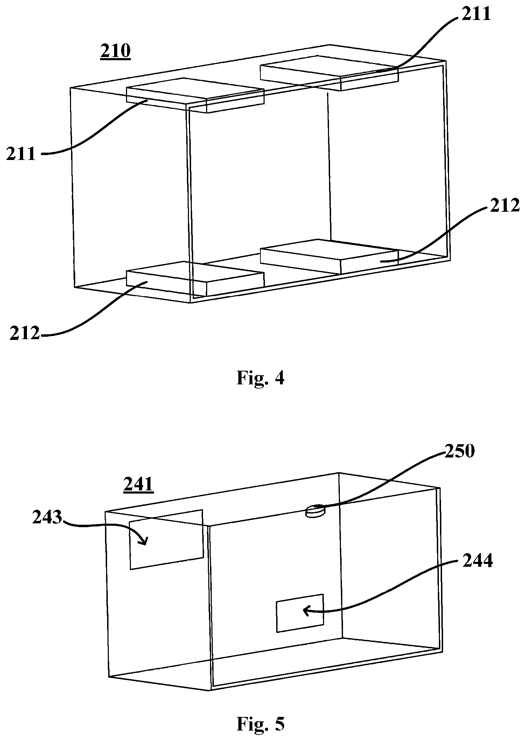

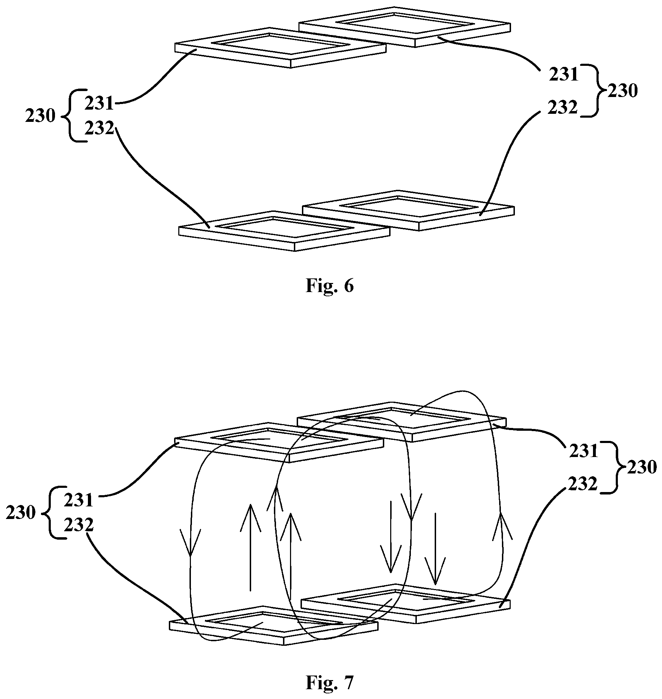

FIG. 2 is a schematic diagram of the freezing storage device 200 of the refrigerator 10 with a freezing storage device 200 according to an embodiment of the present invention; FIG. 3 is a schematic diagram of fitting of a magnetic frame 210 and a storage box 240 in the refrigerator 10 with a freezing storage device 200 according to an embodiment of the present invention (in order to show an internal structure, a drawer 242 is omitted); FIG. 4 is a schematic diagram of the magnetic frame 210 in the refrigerator 10 with a freezing storage device 200 according to an embodiment of the present invention; FIG. 5 is a schematic diagram of an outer cylinder 241 of the storage box 240 in the refrigerator 10 with a freezing storage device 200 according to an embodiment of the present invention; FIG. 6 is a schematic diagram of an electromagnetic coil 230 in the refrigerator 10 with a freezing storage device 200 according to an embodiment of the present invention.

As shown in FIGS. 2 to 6, the freezing storage device 200 is arranged in the storage compartment, and may generally comprise: plural groups of electromagnetic coils 230, the storage box 240, a storage detection device 250, or the like.

The storage box 240 may form an independent and sealed freezing storage space, thereby providing a better freezing storage environment for a specific food material. The storage box 240 is provided in a space enclosed by the magnetic frame 210.

The storage box 240 may comprise: an outer cylinder 241 and a drawer 242. The outer cylinder 241 is provided in the magnetic frame 210 and has a forward opening. The drawer 242 is provided in the outer cylinder 241 in a drawable mode. A front panel of the drawer 242 and the outer cylinder 241 may form a sealed structure. When the refrigerator 10 performs refrigeration by air cooling, an air inlet 243 and an air return port 244 are formed in a rear wall of the outer cylinder 241, the air inlet 243 is configured to be connected with an air supply port of an air duct of the refrigerator 10 or communicated with an evaporator of the refrigerator 10 (for example, communicated with a top region of the evaporator), so as to introduce refrigerating airflow into the storage box 240; the air return port 244 is configured to be connected with an air return port of the air duct of the refrigerator 10 or communicated with the evaporator of the refrigerator 10 (for example, communicated with a bottom region of the evaporator), so as to feed airflow after heat exchange back to an air return duct or evaporator of the refrigerator 10. In some embodiments, the air inlet 243 and the air return port 244 may be provided with dampers (not shown). The damper is controlled to be opened during refrigerating air supply. The air inlet 243 and the air return port 244 may be configured according to positions and structures of the air duct and the evaporator of the air-cooled refrigerator, and in some other embodiments, the air return port 244 may also be provided on a side wall of the outer cylinder 241.

The storage detection device 250 is provided in the storage box 240 and configured to detect a state of stored food in the freezing storage space. The storage detection device 250 may be configured as an infrared sensor capable of scanning temperature distribution in the freezing storage space of the storage box 240, or may be configured as a plurality of independent infrared sensors (each infrared sensor is configured to detect a temperature of a certain region in the freezing storage space). The storage detection device 250 may obtain a change in an internal temperature of each position in the freezing storage space through detection. In some embodiments, the storage detection device 250 may be provided inside a top wall of the outer cylinder 241.

The plural groups of electromagnetic coils 230 are transversely arranged outside the storage box 240 in parallel, and configured to determine a corresponding magnetic field application mode according to the state of the stored food, and the magnetic field application mode comprises: stopping of generation of the magnetic field, independent starting of one group of electromagnetic coils, starting of any number of groups of electromagnetic coils, and starting of all the electromagnetic coils. The magnetic field application mode of the electromagnetic coil 230 may be adjusted according to the detection result of the storage detection device 250.

In some embodiments, each group of electromagnetic coils 230 may comprise: first coils 231 oppositely arranged at a top of the storage box and second coils 232 oppositely arranged at a bottom of the storage box 240, the first coil 231 and the second coil 232 being connected in series or in parallel. The first coil 231 and the second coil 232 of each group of electromagnetic coils 230 are started or stopped at the same time, such that the magnetic field is formed in the freezing storage space between the first coil 231 and the second coil 232. The entire freezing storage space may be covered using the plural groups of electromagnetic coils 230.

In the present embodiment, an even number of groups of electromagnetic coils 230 can be selected. In particular, two groups of electromagnetic coils 230 can be selected and correspond to a left half and a right half of the storage box 240 respectively. For example, when a new food material is detected to be put into the left half of the storage box 240, the left electromagnetic coil 230 may be started; when a new food material is detected to be put into the right half of the storage box 240, the right electromagnetic coil 230 may be started. When more new food materials are put in, the two groups of electromagnetic coils 230 can be simultaneously started. In the magnetic field mode in which the two groups of coils 230 are simultaneously started, the magnetic pole directions of the two groups of electromagnetic coils 230 may be set to be opposite, such that magnetic lines may be more uniform, and a magnetization effect on the outside may be canceled or reduced. Since the magnetic field application mode can be adjusted flexibly, the magnetic field in the freezing storage space can be suitable for the freezing refrigeration process, which improves the freezing storage quality and meets a requirement of a user for storage quality of a precious food material.

In some embodiments, the refrigerator 10 according to the present embodiment may also be provided with the magnetic frame 210. The magnetic frame 210 is made of a magnetic material, fitted over the storage box 240 and configured to allow the magnetic field to pass through the magnetic frame 210 to complete a closed loop of the magnetic line. The magnetic material may be a soft magnetic material or hard magnetic material; for example, a soft magnetic material may be used and is characterized by low coercivity and high magnetic permeability, and the magnetic frame 210 may be configured to focus the magnetic field, so as to reduce outward release of the magnetic field, and reduce interference with other components outside the freezing storage device 200 (for example, magnetization of other components, or the like).

A plurality of first bosses 211 arranged at intervals in a transverse direction of the storage box 240 are formed on an inner side of a top wall of the magnetic frame 210, and each first boss 211 is configured to arrange the first coil 231 of one group of electromagnetic coils; second bosses 212 arranged opposite to the first bosses 211 are formed on an inner side of a bottom wall of the magnetic frame 210, and each second boss 212 is configured to arrange the second coil 232 of one group of electromagnetic coils. That is, the first coil 231 is fitted over the first boss 211, and the second coil 232 is fitted over the second boss 212. In the case of two groups of electromagnetic coils 230, two first bosses 211 and two second bosses 212 may be provided.

In some embodiments, the magnetic frame 210 may be configured as a square cylinder having a through opening in a front-rear direction, i.e., a frame with a cross section shaped like a square with a small hollow square in the center. Each of a front end and a rear end of the square cylinder is provided with the through opening for arranging various types of storage boxes 240. The first boss 211 and the second boss 212 are formed on the top wall and the bottom wall of the magnetic frame 210 respectively. The first boss 211 and the second boss 212 provide mounting structures for the first coil 231 and the second coil 232 respectively. The magnetic frame 210 provides a closed path of the magnetic line and provides an assembly structure for the electromagnetic coil 230, which reduces an occupied space, thereby improving practicality.

Cross sections of the first boss 211 and the second boss 212 may be square, circular or elliptical, and when a square cross section is used, the first boss 211 and the second boss 212 can be more conveniently fitted with the cabinet 120 structurally. Inner circumferences of the first coil 231 and the second coil 232 are fitted with outer circumferences of the corresponding first boss 211 and second boss 212, and are correspondingly formed in a square, circular, or elliptical shape. In some embodiments, the first coil 231 and the second coil 232 have a mirrored arrangement.

The first coil 231 and the second coil 232 may be formed in a flat box shape, and circumferentially wound, such that the magnetic pole direction of the magnetic field generated after the first coil 231 and the second coil 232 are energized is perpendicular to the first boss 211 and the second boss 212. Heights of the first boss 211 and the second boss 212 may be fitted with thicknesses of the first coil 231 and the second coil 232, such that the inner walls of the frame shaped like a square with a small hollow square in the center are substantially flush, so as to arrange the storage box 240. In some other embodiments, the first coil 231 and the second coil 232 may be formed in a flat elliptical or circular ring shape.

The magnetic frame 210 is configured to guide the magnetic field generated by the electromagnetic coil 230, so as to prevent the magnetic field from being uneven and influencing other components outside the storage box 240, and enable the electromagnetic coil 230 to form a uniform magnetic field with strength enough to meet a requirement of improving the freezing storage quality in the freezing storage space.

Generally speaking, the magnetic field arrangement structure of the two groups of electromagnetic coils 230 comprising the first coil 231 and the second coil 232 can meet various control requirements of magnetic-field-assisted refrigeration, and a type of the magnetic field is more flexible. For some special use scenarios, those skilled in the art may provide more groups of electromagnetic coils 230. In the magnetic field mode in which the two groups of coils 230 are simultaneously started, the magnetic pole directions of the two groups of electromagnetic coils 230 are set to be opposite, such that the magnetic lines are more uniform, and the magnetization effect on the outside may be canceled or reduced. Each group of electromagnetic coils 230 can be independently controlled to realize various magnetic field application modes.

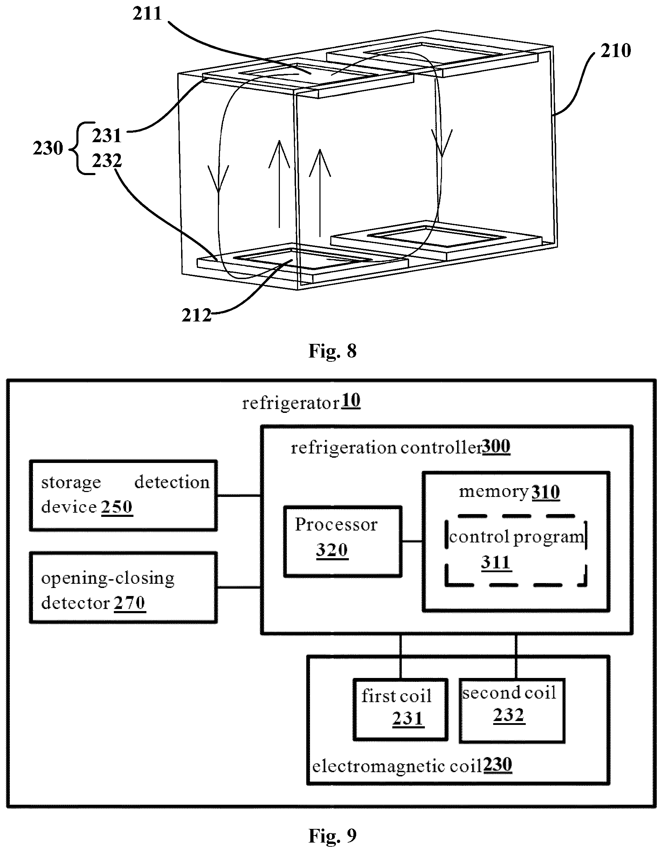

Each of FIGS. 7 and 8 is a schematic diagram of a magnetic field formed in the freezing storage device of the refrigerator with a freezing storage device according to an embodiment of the present invention; the magnetic field of FIG. 7 is generated when the two groups of electromagnetic coils 230 are simultaneously started, and can be applied to a case where the magnetic field is required to assist in freezing freshness retaining in most regions of the freezing storage space, and in this case, the magnetic pole directions of the two groups of electromagnetic coils 230 are set to be opposite, the magnetic fields generated by the two groups of coils 230 are superimposed with each other to reduce outside leakage of the magnetic fields, and effective magnetic flux density generated under a unit current is higher, which facilitates a reduction of a heat generation amount of the coils 230. Since the outside magnetic fields generated by the two groups of coils are mutually superposed, the magnetic frame 210 can be omitted without influencing the magnetic flux density in the freezing storage space, thus saving a cost of a magnetic field freshness-retaining device.

When the user only puts the food material on one side of the freezing storage space, only the electromagnetic coil 230 on this side may be started, which applies in particular to a wide drawer of a freezing compartment of a French refrigerator. Since the whole freezing storing space is wide, by detecting the storage state, only the electromagnetic coil on one side is started, thus saving electric energy consumption and reducing heating of the coil. The magnetic field of FIG. 8 is generated when the left electromagnetic coil 230 is started, and can be applied to a case where the magnetic field is required to assist in freezing freshness retaining in the left region of the freezing storage space. Similarly, when the magnetic field is required to assist in freezing freshness retaining in the right region of the freezing storage space, the right electromagnetic coil 230 can be started.

In the refrigerator 10 according to the present embodiment, control over the magnetic field of the electromagnetic coil 230 is combined with refrigeration control, so as to ensure that the food is frozen in the magnetic field environment, thereby achieving a freshness-retaining freezing effect. FIG. 9 is a block diagram of a control system of the refrigerator 10 with a freezing storage device 200 according to an embodiment of the present invention, and the refrigerator 10 is further provided with the storage detection device 250, an opening-closing detector 270, and a refrigeration controller 300.

The storage detection device 250 is provided in the outer cylinder 241 of the storage box 240 and configured to detect a temperature in the drawer 242, and may further obtain the change in the internal temperature of a region in the freezing storage space corresponding to each group of electromagnetic coils 230 before the storage box 240 is opened and after the storage box is closed, for example, may detect the change in the temperature of the left region and the change in the temperature of the right region of the freezing storage space.

The opening-closing detector 270 is configured to detect an opening-closing state of the drawer 242. After the drawer 242 is pulled to be open and then closed, whether the new food material is put in or whether the original food material is required to be refrozen may be detected by means of the storage detection device 250. Then, the electromagnetic coil 230 is fitted with the refrigeration system, such that magnetic-field-assisted freezing can be realized, and a freezing freshness-retaining effect of the food material is improved.

The refrigeration controller 300 comprises a memory 310 and a processor 320. A control program 311 is stored in the memory 310, and when executed by the processor 320, the control program 311 is used to control the electromagnetic coil 230 and the refrigeration system, so as to implement a corresponding freezing control method. Various sensors provide detection means for magnetic field control, such that a control requirement of the control method can be met.

The refrigeration controller 300 may be configured to start refrigeration of the storage box 240 when the change in the internal temperature of the region corresponding to any group of electromagnetic coils before the storage box 240 is opened and after the storage box 240 is closed is greater than a first set threshold. The change in the internal temperature of the storage box 240 reflects the state of the stored food, and a large change in the internal temperature indicates that new food is put into the storage box 240, or the temperature of the food is raised and the food is required to be refrozen; a small change in the internal temperature indicates that the food may still be in a frozen state. When the change in the internal temperature of a certain region in the freezing storage space is greater than the first set threshold, the refrigeration controller 300 starts freezing refrigeration of the storage box 240. The first set threshold can be set to 2 to 8 Celsius degrees, and can be flexibly set according to a freezing set temperature. For example, when the change in the internal temperature of either the left region or the right region of the freezing storage space is greater than the first set threshold, freezing refrigeration is started.

The electromagnetic coils of the corresponding region with the change in the internal temperature greater than the first set threshold are started at the same time to release the magnetic field.

During freezing refrigeration of the storage box 240, the freezing storage quality of the stored food can be better by using an assisting effect of the magnetic field, and a sterilization effect is better. In addition, the starting condition can also avoid heating and an energy consumption increase caused by long-term formation of a magnetic field, and can also avoid the magnetization influence on other components outside the storage box 240.

After the electromagnetic coil 230 is started, when the internal temperature of the corresponding region is lowered to a second set threshold, generation of the magnetic field is stopped, and as the freezing process continues, the magnetic field required for assisting in freezing is correspondingly reduced, and energy consumption can be further reduced by stopping the electromagnetic coil 230; the second set threshold can be set to -10 to 12 Celsius degrees, and in the temperature range, the stored food is mostly frozen.

Then, after the internal temperature of the corresponding region of all the electromagnetic coils 230 is continuously lowered to a third set threshold, the refrigeration controller 300 stops refrigeration of the storage box 240, and the third set threshold is less than the second set threshold, may be set according to a set freezing shutdown temperature of the storage box 240, and may generally be lower than the set freezing shutdown temperature. That is, after the magnetic field coil 230 finishes working, freezing refrigeration is stopped after a period of time. Since the refrigeration is performed after the storage box 240 is opened, the third set threshold is set to be lower, thereby realizing supercooling to some extent and improving the freezing storage quality.

After stopping refrigeration of the storage box 240, the refrigeration controller 300 may be further configured to: perform conventional freezing control on the storage box 240 according to a refrigeration starting condition and a refrigeration stopping condition preset for the storage box 240, so as to maintain the freezing storage environment of the storage box 240; and the electromagnetic coil 230 may be configured to generate the magnetic field according to a preset switching strategy during the conventional freezing control over the storage box 240 by the refrigeration controller 300.

After magnetic-field-assisted freezing refrigeration is completed, normal freezing control of the storage box 240 is recovered; that is, freezing control of the storage box 240 is performed according to the refrigeration starting condition and the refrigeration stopping condition preset for the storage box 240. The refrigeration starting condition and the refrigeration stopping condition can also be set according to the set temperature of the storage box 240, the refrigeration is started when the set temperature is higher than a refrigeration starting temperature, and refrigeration is stopped when the set temperature is lower than a refrigeration stopping temperature.

In the step of performing the freezing control on the storage box 240 according to the refrigeration starting condition and the refrigeration stopping condition preset for the storage box 240, magnetic-field-assisted refrigeration can be used, thus avoiding that the storage quality is reduced when part of the ice crystals are regenerated. One switching strategy may be as follows: the magnetic field is started or stopped while the refrigeration of the storage box 240 is started or stopped; that is, the magnetic field and the refrigeration are started or stopped simultaneously. Another alternative solution is as follows: the magnetic field is started when the refrigeration of the storage box 240 is started, and is stopped before the refrigeration of the storage box 240 is stopped; that is, the magnetic field is started only at an initial stage of the refrigeration. Through practical tests, the storage quality realized when the magnetic field is only started at the initial stage of the refrigeration is not obviously reduced compared with the storage quality realized when the magnetic field and the refrigeration are started or stopped simultaneously.

Another switching strategy in a long-term freezing process may be as follows: in the process of performing the freezing control on the storage box 240 according to the refrigeration starting condition and the refrigeration stopping condition preset for the storage box 240, the magnetic field is started according to a set period; that is, the magnetic field is started periodically.

In another embodiment, the two groups of electromagnetic coils 230 may alternately generate the magnetic field when the magnetic field is started for normal freezing control of the storage box 240; for example, the left electromagnetic coil 230 and the right electromagnetic coil are started alternatively.

During an application to the air-cooled refrigerator, the step of starting refrigeration of the storage box 240 may comprise: opening the air inlet and starting blowing of the refrigerating airflow to the air inlet 243.

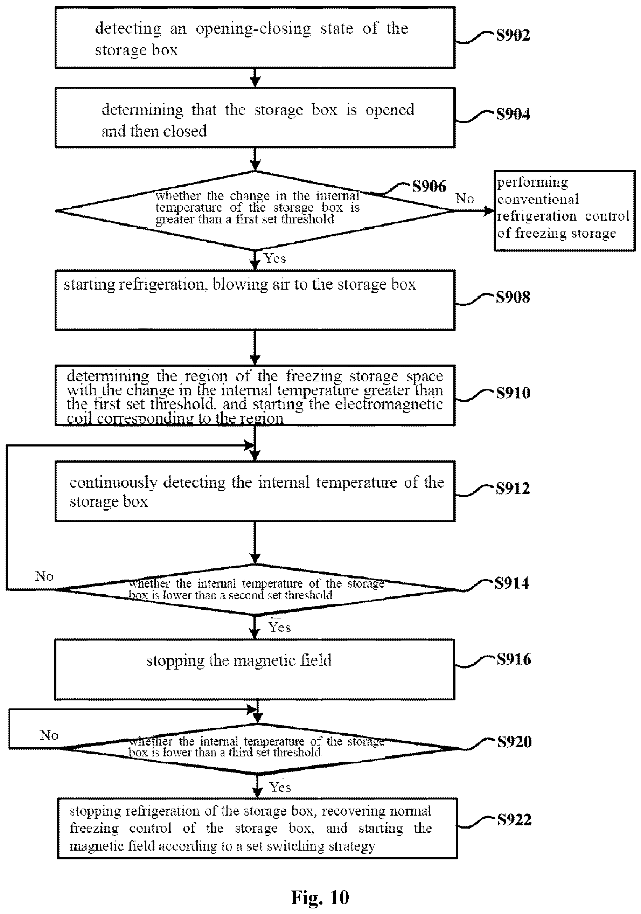

FIG. 10 is a schematic diagram of a freezing control method of the refrigerator with a freezing storage device not part of the claimed invention. The process of the present embodiment is a specific application example of the freezing control method of the refrigerator, in which an execution sequence of some steps can be adjusted. The process may comprise:
step S902: detecting an opening-closing state of the storage box 240;
step S904: determining that the storage box 240 is opened and then closed; that is, judging whether an opening-closing event occurs in the storage box 240;
step S906: obtaining a change in an internal temperature before the storage box 240 is opened and after the storage box 240 is closed, and judging whether the change in the internal temperature is greater than a first set threshold; that is, judging whether new food is put into the storage box 240 or whether a temperature of the food rises and the food is required to be refrozen, wherein the first set threshold may be set to 2 to 8 Celsius degrees; and when the change in the internal temperature is small and the food may not be required to be refrozen, performing conventional refrigeration control of freezing storage; that is, performing refrigeration control according to a set start-up temperature threshold and a set shutdown temperature threshold;
step S908: starting refrigeration, and blowing air to the storage box 240;
step S910: determining the region of the freezing storage space with the change in the internal temperature greater than the first set threshold, and starting the electromagnetic coil 230 corresponding to the region; wherein when the change in the internal temperature of the left region of the freezing storage space is greater than the first set threshold, the magnetic field application mode is starting of the left electromagnetic coil 230; when the change in the internal temperature of the right region of the freezing storage space is greater than the first set threshold, the magnetic field application mode is starting of the right electromagnetic coil 230; and when the changes of the internal temperatures of the left and right regions of the freezing storage space are both greater than the first set threshold, the magnetic field application mode is simultaneous starting of the electromagnetic coils on the two sides;
step S912: continuously detecting the internal temperature of the storage box 240;
step S914: judging whether the internal temperature of the storage box 240 is lower than a second set threshold (for example, may be set to -10 to 12 Celsius degrees); that is, judging whether a basic freezing stage is completed;
step S916: stopping the magnetic field;
step S920: judging whether the internal temperature of the storage box 240 is lower than a third set threshold, wherein the third set threshold is less than the second set threshold, may be set according to a set freezing shutdown temperature of the storage box 240, and may generally be lower than the set freezing shutdown temperature;
step S922: stopping refrigeration of the storage box 240, and performing conventional freezing control on the storage box 240 according to a refrigeration starting condition and a refrigeration stopping condition preset for the storage box 240, so as to maintain a freezing storage environment of the storage box 240, wherein the magnetic field is started according to a preset switching strategy during the conventional freezing control.

With the refrigerator 10 with a freezing storage device according to the present embodiment, the food material is frozen in the magnetic field environment, the direction, starting and stopping of the magnetic field are subjected to targeted control, growth of ice crystal nuclei is preferentially suppressed, damage to cells is reduced, water loss is avoided, a better taste of the food material is guaranteed, the freezing storage quality is improved, and the requirement of the user for the storage quality of a precious food material is met.

So far, it should be appreciated by those skilled in the art that while various exemplary embodiments of the invention have been shown and described in detail herein, many other variations or modifications which are consistent with the principles of this invention may be determined or derived directly from the disclosure of the present invention without departing from the scope of the invention as defined in the appended claims. Accordingly, the scope of the invention should be understood and interpreted to cover all such other variations or modifications.

## Claims

1. A refrigerator (10) with a freezing storage device (200), comprising:
a cabinet (120) provided therein with a storage compartment for achieving a freezing storage function;
the freezing storage device (200) arranged in the storage compartment and comprising:
a storage box (240) having a freezing storage space defined therein;
a storage detection device (250) provided in the storage box (240) and configured to detect a state of stored food in the freezing storage space; and
a plurality of groups of electromagnetic coils (230) transversely arranged outside the storage box (240) in parallel and configured to determine a corresponding magnetic field application mode according to the state of the stored food, the magnetic field application mode comprising: stopping of generation of the magnetic field, starting of part of the plural groups of electromagnetic coils (230), and complete starting of the plural groups of electromagnetic coils (230);
an opening-closing detector (270),
wherein the opening-closing detector (270) is configured to detect an opening-closing state of the storage box (240); **characterized in that**
the storage detection device (250) is further configured to detect a change in an internal temperature of a region in the freezing storage space corresponding to each group of electromagnetic coils (230) before the storage box (240) is opened and after the storage box (240) is closed;
a refrigeration controller (300) is configured to start refrigeration of the storage box (240) under a condition that the change in the internal temperature of the region corresponding to any group of electromagnetic coils (230) is greater than a first set threshold; and
the electromagnetic coil (230) in the corresponding region with the change in the internal temperature greater than the first set threshold is started to release the magnetic field.

2. The refrigerator (10) with a freezing storage device (200) according to claim 1,
wherein each group of electromagnetic coils (230) comprises:
first coils (231) oppositely arranged at a top of the storage box (240) and second coils (232) oppositely arranged at a bottom of the storage box (240), the first coil (231) and the second coil (232) being connected in series or in parallel.

3. The refrigerator (10) with a freezing storage device (200) according to claim 2, wherein the freezing storage device (200) further comprises:
a magnetic frame (210) made of a magnetic material, fitted over the storage box (240) and configured to allow the magnetic field to pass through the magnetic frame (210) to complete a closed loop of a magnetic line.

4. The refrigerator (10) with a freezing storage device (200) according to claim 3,
wherein a plurality of first bosses (211) arranged at intervals in a transverse direction of the storage box (240) are formed on an inner side of a top wall of the magnetic frame (210), and each first boss (211) is configured to arrange the first coil (231) of one group of electromagnetic coils (230);
second bosses (212) arranged opposite to the first bosses (211) are formed on an inner side of a bottom wall of the magnetic frame (210), and each second boss (212) is configured to arrange the second coil(232) of one group of electromagnetic coils (230).

5. The refrigerator (10) with a freezing storage device (200) according to claim 3, wherein the storage box (240) comprises:
an outer cylinder (241) provided in the space enclosed by the magnetic frame (210) and provided with a forward opening; and
a drawer (242) provided in the outer cylinder (241) in a drawable mode.

6. The refrigerator (10) with a freezing storage device (200) according to claim 5,
wherein an air inlet (243) and an air return port (244) are formed in a rear wall of the outer cylinder (241), and
the air inlet (243) is configured to be connected with an air supply duct of the refrigerator (10) or communicated with an evaporator of the refrigerator (10), so as to introduce refrigerating airflow into the storage box (240);
the air return port (244) is configured to be connected with an air return duct of the refrigerator (10) or communicated with the evaporator of the refrigerator (10), so as to feed airflow after heat exchange back to the air return duct or the evaporator of the refrigerator (10).

7. The refrigerator (10) with a freezing storage device (200) according to claim 1,
wherein two groups of electromagnetic coils (230) are provided, and in a magnetic field mode in which the two groups of coils are started simultaneously, magnetic pole directions of the two groups of electromagnetic coils (230) are set to be opposite.

8. The refrigerator (10) with a freezing storage device (200) according to claim 1,
wherein after the electromagnetic coil (230) is started, when the internal temperature of the corresponding region is lowered to a second set threshold, the generation of the magnetic field is stopped.

9. The refrigerator (10) with a freezing storage device (200) according to claim 8,
wherein the refrigeration controller (300) is further configured to stop the refrigeration of the storage box (240) after the internal temperatures of the corresponding regions of the plural groups of electromagnetic coils (230) are lowered to a third set threshold, and perform conventional freezing control on the storage box (240) according to a refrigeration starting condition and a refrigeration stopping condition preset for the storage box (240), so as to maintain a freezing storage environment of the storage box (240); the third set threshold is lower than the second set threshold.

## Patentansprüche

1. Ein Kühlschrank (10) mit einer Gefrierlagerungsanordnung (200), umfassend:
ein Gehäuse (120), das ein Lagerfach enthält, um eine Gefrierlagerungsfunktion zu erzielen;
die Gefrierlagerungsanordnung (200), die in dem Lagerfach angeordnet ist und umfasst:
einen Lagerkasten (240), der einen Gefrierlagerungsraum enthält;
eine Lagerungsdetektionsvorrichtung (250), die in dem Lagerkasten (240) eingerichtet ist und dazu eingerichtet ist, einen Zustand von gelagerten Speisen in dem Gefrierlagerungsraum zu detektieren; und
eine Vielzahl von Gruppen elektromagnetischer Spulen (230), die quer außerhalb des Lagerkastens (240) parallel angeordnet und dazu eingerichtet sind, einen entsprechenden Magnetfeldanwendungsmodus gemäß dem Zustand der gelagerten Speise zu bestimmen, wobei der Magnetfeldanwendungsmodus umfasst: Anhalten einer Erzeugung des Magnetfeldes, Starten eines Teils der Vielzahl von Gruppen elektromagnetischer Spulen (230) und vollständiges Starten der Vielzahl von Gruppen elektromagnetischer Spulen (230);
einen Öffnungs-/Schließ-Detektor (270),
wobei der Öffnungs-/Schließ-Detektor (270) dazu eingerichtet ist, einen Öffnungs-Schließ-Zustand des Lagerkastens (240) zu detektieren; **dadurch gekennzeichnet, dass**
die Lagerungsdetektionsvorrichtung (250) ferner dazu eingerichtet ist, eine Änderung einer Innentemperatur eines Bereichs in dem Gefrierlagerungsraum zu detektieren, der jeder Gruppe elektromagnetischer Spulen (230) entspricht, bevor der Lagerkasten (240) geöffnet wird und nachdem der Lagerkasten (240) geschlossen wird;
eine Kühlungssteuerung (300) dazu eingerichtet ist, die Kühlung des Lagerkastens (240) unter einer Bedingung zu starten, dass die Änderung der Innentemperatur des Bereichs, der jeder beliebigen Gruppe elektromagnetischer Spulen (230) entspricht, größer ist als ein erster festgelegter Schwellenwert; und
die elektromagnetische Spule (230) in dem entsprechenden Bereich mit der Änderung der Innentemperatur größer als der erste festgelegte Schwellenwert wird gestartet, um das Magnetfeld freizugeben.

2. Der Kühlschrank (10) mit einer Gefrierlagerungsanordnung (200) gemäß Anspruch 1,
wobei jede Gruppe elektromagnetischer Spulen (230) umfasst:
erste Spulen (231), die gegenüberliegend an einer Oberseite des Lagerkastens (240) angeordnet sind, und zweite Spulen (232), die gegenüberliegend an einer Unterseite des Lagerkastens (240) angeordnet sind, wobei die erste Spule (231) und die zweite Spule (232) in Reihe oder parallel geschaltet sind.

3. Der Kühlschrank (10) mit einer Gefrierlagerungsanordnung (200) gemäß Anspruch 2, wobei die Gefrierlagerungsanordnung (200) ferner umfasst:
einen Magnetrahmen (210) aus einem magnetischen Material, der über dem Lagerkasten (240) angebracht und dazu eingerichtet ist, das Magnetfeld durch den Magnetrahmen (210) hindurchtreten zu lassen, um eine vollständige geschlossene Schleife einer magnetischen Linie zu schließen.

4. Der Kühlschrank (10) mit einer Gefrierlagerungsanordnung (200) gemäß Anspruch 3,
wobei eine Vielzahl von ersten Vorsprüngen (211), die in Abständen in einer Querrichtung des Lagerkastens (240) angeordnet sind, an einer Innenseite einer oberen Wand des Magnetrahmens (210) ausgebildet sind, und jeder erste Vorsprung (211) dazu eingerichtet ist, die erste Spule (231) einer Gruppe elektromagnetischer Spulen (230) anzuordnen;
zweite Vorsprünge (212), die gegenüber den ersten Vorsprüngen (211) angeordnet sind, sind an einer Innenseite einer unteren Wand des Magnetrahmens (210) ausgebildet, und jeder zweite Vorsprung (212) ist dazu eingerichtet, die zweite Spule (232) einer Gruppe elektromagnetischer Spulen (230) anzuordnen.

5. Der Kühlschrank (10) mit einer Gefrierlagerungsanordnung (200) gemäß Anspruch 3, wobei der Lagerkasten (240) umfasst:
einen Außenzylinder (241), der in dem von dem Magnetrahmen (210) umschlossenen Raum vorgesehen und mit einer vorderen Öffnung versehen ist; und
eine Schublade (242), die in dem Außenzylinder (241) in einer ausziehbaren Weise bereitgestellt ist.

6. Der Kühlschrank (10) mit einer Gefrierlagerungsanordnung (200) gemäß Anspruch 5,
wobei ein Lufteinlass (243) und eine Luftrückführöffnung (244) in einer Rückwand des Außenzylinders (241) gebildet sind, und
der Lufteinlass (243) dazu eingerichtet ist, mit einem Luftzufuhrkanal des Kühlschranks (10) verbunden zu sein oder mit einem Verdampfer des Kühlschranks (10) in Verbindung zu stehen, um einen Kühlluftstrom in den Lagerkasten (240) einzuleiten;
wobei die Luftrückführöffnung (244) dazu eingerichtet ist, mit einem Luftrückführkanal des Kühlschranks (10) verbunden zu sein oder mit dem Verdampfer des Kühlschranks (10) in Verbindung zu stehen, um einen Luftstrom nach dem Wärmeaustausch zurück zum Luftrückführkanal oder zum Verdampfer des Kühlschranks (10) zu leiten.

7. Der Kühlschrank (10) mit einer Gefrierlagerungsanordnung (200) gemäß Anspruch 1,
wobei zwei Gruppen elektromagnetischer Spulen (230) bereitgestellt sind und in einem Magnetfeldmodus, in dem die zwei Gruppen von Spulen gleichzeitig gestartet werden, die Magnetpolrichtungen der beiden Gruppen elektromagnetischer Spulen (230) so festgelegt sind, dass sie entgegengesetzt sind.

8. Der Kühlschrank (10) mit einer Gefrierlagerungsanordnung (200) gemäß Anspruch 1,
wobei nach dem Starten der elektromagnetischen Spule (230), wenn die Innentemperatur des entsprechenden Bereichs auf einen zweiten festgelegten Schwellenwert abgesenkt wird, die Erzeugung des Magnetfelds gestoppt wird.

9. Der Kühlschrank (10) mit einer Gefrierlagerungsanordnung (200) gemäß Anspruch 8,
wobei die Kühlungssteuerung (300) ferner dazu eingerichtet ist, die Kühlung des Lagerkastens (240) zu stoppen, nachdem die Innentemperaturen der entsprechenden Bereiche der Vielzahl von Gruppen elektromagnetischer Spulen (230) auf einen dritten festgelegten Schwellenwert abgesenkt sind, und eine herkömmliche Gefriersteuerung an dem Lagerkasten (240) gemäß einer Kühlstartbedingung und einer Kühltoppbedingung durchzuführen, die für den Lagerkasten (240) voreingestellt sind, um eine Gefrierlagerungsumgebung des Lagerkastens (240) aufrechtzuerhalten; der dritte festgelegter Schwellenwert ist niedriger als der zweite festgelegte Schwellenwert.

## Revendications

1. Un réfrigérateur (10) avec un dispositif de stockage de congélation (200), comprenant :
un meuble (120) prévu là-dedans avec un compartiment de stockage pour atteindre une fonction de stockage de congélation ;
le dispositif de stockage de congélation (200) est disposé dans le compartiment de stockage et comprenant :
une boîte de stockage (240) ayant un espace de stockage de congélation défini là-dedans ;
un dispositif de détection de stockage (250) prévu dans la boîte de stockage (240) et configuré pour détecter un état de la nourriture stockée dans l'espace de stockage de congélation ; et
une pluralité de groupes de bobines électromagnétiques (230) disposés transversalement à l'extérieur de la boîte de stockage (240) en parallèle et configurés pour déterminer un mode d'application de champ magnétique correspondant selon l'état de la nourriture stockée, le mode d'application de champ magnétique comprenant : arrêt de génération du champ magnétique, démarrage d'une partie des groupes pluriels de bobines électromagnétiques (230), et démarrage complet des groupes pluriels de bobines électromagnétiques (230) ;
un détecteur d'ouverture-fermeture (270),
dans lequel le détecteur d'ouverture-fermeture (270) est configuré pour détecter un état d'ouverture-fermeture de la boîte de stockage (240) ; **caractérisé en ce que**
le dispositif de détection de stockage (250) est en outre configuré pour détecter un changement de température interne d'une région de l'espace de stockage de congélation correspondant à chaque groupe de bobines électromagnétiques (230) avant la boîte de stockage (240) est ouverte et après la boîte de stockage (240) est fermée ;
un contrôleur de réfrigération (300) est configuré pour démarrer la réfrigération de la boîte de stockage (240) sous une condition que le changement de la température interne de la région correspondant à quelconque groupe de bobines électromagnétiques (230) est supérieur à un premier seuil fixé ; et
la bobine électromagnétique (230) dans la région correspondante avec le changement de la température interne supérieur au premier seuil fixé est démarrée pour libérer le champ magnétique.

2. Le réfrigérateur (10) avec un dispositif de stockage de congélation (200) selon la revendication 1,
dans lequel chaque groupe de bobines électromagnétiques (230) comprend :
des premières bobines (231) disposées de manière opposée à un sommet de la boîte de stockage (240) et des deuxièmes bobines (232) disposées de manière opposée à un fond de la boîte (240), la première bobine (231) et la deuxième bobine (232) étant connectées en série ou en parallèle.

3. Le réfrigérateur (10) avec un dispositif de stockage de congélation (200) selon la revendication 2, dans lequel le dispositif de stockage de congélation (200) comprend en outre :
un cadre magnétique (210) fabriqué d'un matériau magnétique, ajusté sur la boîte de stockage (240) et configuré pour permettre au champ magnétique de passer à travers le cadre magnétique (210) pour compléter une boucle fermée d'une ligne magnétique.

4. Le réfrigérateur (10) avec un dispositif de stockage de congélation (200) selon la revendication 3,
dans lequel une pluralité de premières bosses (211) disposées à intervalles dans une direction transverse de la boîte de stockage (240) sont formées sur une face intérieure d'une paroi de sommet du cadre magnétique (210), et chaque première bosse (211) est configurée pour disposer la première bobine (231) d'un groupe de bobines électromagnétiques (230) ;
des deuxièmes bosses (212) disposées de manière opposée aux premières bosses (211) sont formées sur une face intérieure d'une paroi de fond du cadre magnétique (210), et chaque deuxième bosse (212) est configurée pour disposer la deuxième bobine (232) d'un groupe de bobines électromagnétiques (230).

5. Le réfrigérateur (10) avec un dispositif de stockage de congélation (200) selon la revendication 3, dans lequel la boîte de stockage (240) comprend :
un cylindre extérieur (241) disposé dans l'espace enclos par le cadre magnétique (210) et prévu avec une ouverture vers l'avant ; et
un tiroir (242) prévu dans le cylindre extérieur (241) dans un mode pouvant être tiré.

6. Le réfrigérateur (10) avec un dispositif de stockage de congélation (200) selon la revendication 5,
dans lequel une entrée d'air (243) et un port de retour d'air (244) sont formés dans une paroi arrière du cylindre extérieur (241), et
l'entrée d'air (243) est configurée pour être connectée à un conduit d'alimentation en air du réfrigérateur (10) ou communiquée avec un évaporateur du réfrigérateur (10), afin d'introduire un flux d'air réfrigérant dans la boîte de stockage (240) ;
le port de retour d'air (244) est configuré pour être connecté à un conduit de retour d'air du réfrigérateur (10) ou communiqué avec l'évaporateur du réfrigérateur (10), afin de renvoyer le flux d'air après échange de chaleur vers le conduit de retour d'air ou l'évaporateur du réfrigérateur (10).

7. Le réfrigérateur (10) avec un dispositif de stockage de congélation (200) selon la revendication 1,
dans lequel deux groupes de bobines électromagnétiques (230) sont prévus, et dans un mode champ magnétique dans lequel les deux groupes de bobines sont démarrés simultanément, des directions de pôle magnétique des deux groupes de bobines électromagnétiques (230) sont réglées à être opposées.

8. Le réfrigérateur (10) avec un dispositif de stockage de congélation (200) selon la revendication 1,
dans lequel après la bobine électromagnétique (230) est démarrée, lorsque la température interne de la région correspondante est abaissée à un deuxième seuil fixé, la génération du champ magnétique est arrêtée.

9. Le réfrigérateur (10) avec un dispositif de stockage de congélation (200) selon la revendication 8,
dans lequel le contrôleur de réfrigération (300) est en outre configuré pour arrêter la réfrigération de la boîte de stockage (240) après les températures internes des régions correspondantes des groupes pluriels de bobines électromagnétiques (230) sont abaissées à un troisième seuil fixé, et effectuer un contrôle de congélation conventionnel sur la boîte de stockage (240) selon une condition de démarrage de réfrigération et une condition d'arrêt de réfrigération prédéfinies pour la boîte de stockage (240), afin de maintenir un environnement de stockage de congélation de la boîte de stockage (240) ; le troisième seuil fixé est inférieur au deuxième seuil fixé.
